# EUROPÄISCHE PATENTSCHRIFT

(11) **EP 3 176 370 B1**
(45) Veröffentlichungstag und Bekanntmachung des Hinweises auf die Patenterteilung: **27.03.2019**
(21) Anmeldenummer: 16201357.7
(22) Anmeldetag: 30.11.2016
(51) Int. Cl.: F01D 5/16, F01D 9/04, F01D 5/14

(54) **LEITSCHAUFELCLUSTER FÜR EINE STRÖMUNGSMASCHINE**
BLADE CLUSTER FOR A FLOW MACHINE
ENSEMBLE D'AUBES DIRECTRICES POUR TURBOMACHINE

(30) Priorität: 04.12.2015 DE 102015224283
(43) Veröffentlichungstag der Anmeldung: 07.06.2017
(73) Patentinhaber: MTU Aero Engines AG, 80995 München (DE)
(72) Erfinder: Schlemmer, Markus, 84048 Mainburg / Sandelzhausen (DE); Pernleitner, Martin, 85221 Dachau (DE); Wolfrum, Nina, 85622 Feldkirchen (DE); Brettschneider, Markus, 85757 Karlsfeld (DE); Mahle, Inga, 81669 München (DE)

(56) Entgegenhaltungen:
- EP-A1- 1 645 720
- WO-A1-2013/186756
- US-A1- 2009 013 532
- US-B2- 9 017 030

## Beschreibung

Die Erfindung betrifft ein Leitschaufelcluster für eine Strömungsmaschine, insbesondere für ein Turboluftstrahltriebwerk. Die Erfindung betrifft weiterhin einen Leitschaufelring für eine Strömungsmaschine sowie eine Strömungsmaschine, insbesondere ein Turboluftstrahltriebwerk.

Leitschaufelcluster für Strömungsmaschinen sind bereits aus dem Stand der Technik bekannt und umfassen zwei oder mehr Schaufeln, die über wenigstens eine gemeinsame Plattform zur radialen Begrenzung eines Strömungskanals der Strömungsmaschine miteinander verbunden sind. Jede Schaufel weist dabei ein Schaufelblatt mit einer Saugseite und einer Druckseite auf, die in einer stromaufwärtigen, im Betrieb vom Arbeitsfluid der Strömungsmaschine angeströmten Vorderkante und einer axial gegenüberliegenden, stromabwärts anzuordnenden Hinterkante miteinander verbunden sind. Mehrere Leitschaufelcluster werden in Form eines Leitschaufelrings in einem Verdichter oder einer Turbine der Strömungsmaschine feststehend gegenüber einem Gehäuse der Strömungsmaschine angeordnet. Die Strömungsmaschine, bei der es sich beispielsweise um ein Turboluftstrahltriebwerk bzw. ein Flugtriebwerk handeln kann, umfasst weiterhin mehrere rotierende Laufschaufeln, die mindestens einem Rotor zugeordnet sind und gegenüber den feststehenden Leitschaufeln sowie dem feststehenden Gehäuse rotieren.

Als nachteilig an den bekannten Leitschaufelclustern ist der Umstand anzusehen, dass diese wie alle mechanischen Strukturen bei ihren Eigenfrequenzen schwingen. Beim Betrieb einer Strömungsmaschine mit einem derartigen Leitschaufelcluster werden dessen Schaufeln daher bei bestimmten Betriebsbedingungen in ihrer Eigenschwingungsform angeregt. Dabei können hohe mechanische Lasten an den Schaufeln bzw. dem Leitschaufelcluster auftreten, da alle Schaufeln bei vergleichbaren Eigenfrequenzen und damit in Phase schwingen. Diese hohen Belastungen schränken einerseits den Betriebsbereich ein und können darüber hinaus die Lebensdauer des Leitschaufelclusters erheblich reduzieren.

Aus der WO 2013/186756 A1 ist ein Leitschaufelcluster mit zwei verschiedenen Leitschaufelsätzen bekannt. Die beiden Leitschaufelsätze unterscheiden sich dadurch voneinander, dass die Leitschaufeln des einen Satzes in einem radial äußeren Bereich und in einem radial inneren Bereich über ihre gesamte Axialerstreckung hinweg einen breiteren Profilquerschnitt als die Leitschaufeln des anderen Satzes aufweisen.

Aufgabe der vorliegenden Erfindung ist es, ein Leitschaufelcluster der eingangs genannten Art zu schaffen, welches ein verbessertes Schwingungsverhalten besitzt. Weitere Aufgaben der Erfindung bestehen darin, einen Leitschaufelkranz mit einem verbesserten Schwingungsverhalten zu schaffen, und eine Strömungsmaschine mit einem solchen Leitschaufelcluster bzw. Leitschaufelkranz bereitzustellen, das bzw. der ein verbessertes Schwingungsverhalten besitzt. Die Aufgaben werden erfindungsgemäß durch ein Leitschaufelcluster mit den Merkmalen des Patentanspruchs 1, einen Leitschaufelring gemäß Patentanspruch 12 sowie durch eine Strömungsmaschine gemäß Patentanspruch 13 gelöst. Vorteilhafte Ausgestaltungen mit zweckmäßigen Weiterbildungen der Erfindung sind in den Unteransprüchen angegeben, wobei vorteilhafte Ausgestaltungen jedes Erfindungsaspekts als vorteilhafte Ausgestaltungen der jeweils anderen Erfindungsaspekte und umgekehrt anzusehen sind.

Ein erster Aspekt der Erfindung betrifft ein Leitschaufelcluster für eine Strömungsmaschine, insbesondere für ein Turboluftstrahltriebwerk, wobei ein verbessertes Schwingungsverhalten erfindungsgemäß dadurch erzielt wird, dass wenigstens zwei Schaufeln zumindest in einem korrespondierenden radialen Längserstreckungsbereich unterschiedliche Hinterkantenwandstärken aufweisen, und dass die wenigstens zwei Schaufel in einem Axialbereich von wenigstens 50% ausgehend von der Vorderkante im Wesentlichen identisch ausgebildet sind. Mit anderen Worten werden in einem Leitschaufelcluster mindestens zwei unterschiedliche Schaufeln bzw. Schaufelblätter erzeugt, die im Vergleich zueinander an einer oder mehreren radialen Positionen unterschiedliche Hinterkantendicken aufweisen. Hierdurch werden die Eigenfrequenzen der wenigstens zwei Schaufeln verändert, so dass diese gezielt verstimmt werden und im Betrieb nicht mehr in Phase schwingen. Durch die individuelle Variierung der Hinterkantenwandstärken für mindestens zwei Schaufeln können zudem gezielte strukturelle Versteifungen an den dafür erforderlichen Stellen erzeugt werden. Zusätzlich wird zwischen den unsymmetrisch ausgebildeten Schaufeln des Leitschaufelclusters ein nichtsymmetrischer Ringraum für das Betriebsmedium der zugeordneten Strömungsmaschine erzeugt, wodurch auch die Aerodynamik des Leitschaufelclusters vorteilhaft optimiert werden kann. Die Richtungsangaben "radial" bzw. "Radial-", "axial-" bzw. "Axial-" und "Umfangs-" beziehen sich im Rahmen der vorliegenden Erfindung immer auf die Maschinenachse einer Strömungsmaschine, wenn das erfindungsgemäße Leitschaufelcluster in dieser bestimmungsgemäß montiert ist, sofern sich aus dem Kontext nicht explizit oder implizit etwas anderes ergibt.

Zwar ist es beispielsweise aus der US 9,097,125 B2 bereits bekannt, in Umfangsrichtung zueinander benachbarte Schaufeln eines Schaufelkranzes unterschiedlich auszubilden, um eine Verstimmung des Schaufelkranzes zu erzielen und somit das Schwingungsverhalten zu verbessern. Jedoch bezieht sich die US 9,097,125 B2 nicht auf Leit- sondern auf Laufschaufeln. Hinzu kommt, dass die US 9,097,125 B2 lehrt, lediglich einen in axialer Richtung betrachtet mittleren Bereich von einigen Schaufeln gegenüber anderen aufzudicken, jedoch die Form, insbesondere Dicke, der Vorder- und Hinterkanten nicht zu variieren.

Wenn die Hinterkante in einem Profilquerschnitt, wenigstens im Wesentlichen, kreissegmentförmig, insbesondere wenigstens im Wesentlichen halbkreisförmig ausgebildet ist, so kann die Sehnenlänge dieses Kreissegments, insbesondere der Durchmesser dieses Halbkreises, die Wandstärke der Hinterkante in diesem Profilquerschnitt bzw. dieser radialen Position in Richtung der radialen Längserstreckung im Sinne der vorliegenden Erfindung definieren. Wenn die Hinterkante in einem Profilquerschnitt, wenigstens im Wesentlichen, ellipsensegmentförmig, insbesondere wenigstens im Wesentlichen halbellipsenförmig ausgebildet ist, so kann die Sehnenlänge dieses Ellipsensegments, insbesondere die Haupt- oder Nebenachse dieser Halbellipse, die Wandstärke der Hinterkante in diesem Profilquerschnitt bzw. dieser radialen Position in Richtung der radialen Längserstreckung im Sinne der vorliegenden Erfindung definieren. Wenn die Hinterkante in einem Profilquerschnitt, wenigstens im Wesentlichen, gerade ausgebildet ist, so kann die Länge dieser geraden Hinterkante die Wandstärke der Hinterkante in diesem Profilquerschnitt bzw. dieser radialen Position in Richtung der radialen Längserstreckung im Sinne der vorliegenden Erfindung definieren. In einer Ausführung kann als Wandstärke der Schaufel bzw. des Schaufelblatts die maximale Wandstärke der Schaufel bzw. des Schaufelblatts in einem Bereich verstanden werden, der sich höchsten 30 %, das heißt höchstens 30 %, 29 %, 28 %, 27 %, 26 %, 25 %, 24 %, 23 %, 22 %, 21 %, 20 %, 19 %, 18 %, 17 %, 16 %, 15 %, 14 %, 13 %, 12 %, 11 %, 10 %, 9 %, 8 %, 7 %, 6 %, 5 %, 4 %, 3 %, 2 %, 1 % oder weniger vor dem axial hinteren Ende des Schaufelblatts stromaufwärts bzw. axial zur Vorderkante hin erstreckt. Die Schaufeln des Leitschaufelcluster können dabei grundsätzlich lösbar oder dauerhaft, insbesondere integral mit der Plattform verbunden sein. Es hat sich dabei überraschend gezeigt, dass das Schwingungsverhalten des Leitschaufelclusters bereits dadurch signifikant verbessert werden kann, indem sich wenigstens zwei Schaufeln des Schaufelclusters im Wesentlichen ausschließlich darin unterscheiden, dass sie in einem korrespondierenden radialen Längserstreckungsbereich unterschiedliche Hinterkantenwandstärken aufweisen. Die wenigstens zwei Leitschaufeln sind in einem Axialbereich von wenigstens 50%, bevorzugt von wenigstens 75%, ausgehend von der Vorderkante der Leitschaufeln im Wesentlichen identisch ausgebildet. Mit anderen Worten wirkt sich die Variation der Hinterkantenwandstärken vorzugsweise nur in einem hinteren Axialbereich aus, welcher höchstens die Hälfte, vorzugsweise höchsten ein Viertel, der axialen Erstreckung der Leitschaufeln zwischen Vorder- und Hinterkante ausgehend von der Hinterkante ausmacht. Ansonsten können die Schaufeln des Leitschaufelclusters im Wesentlichen vollkommen identisch ausgebildet sein. Es ist also nicht notwendig, die gesamten Formen der einzelnen Schaufeln des Leitschaufelclusters zu variieren, zum Beispiel indem einige Schaufeln in ihrem axial mittleren Bereich merklich dicker als andere Schaufeln ausgeführt werden oder indem die Neigung ihrer jeweiligen Fädelachsen gegenüber der Radialen verändert wird. Solche Maßnahmen sind konstruktiv relativ aufwendig und erschweren auch die rechnerische Vorhersage des genauen Strömungsverhaltens in der Strömungsmaschine. Es ist somit das Verdienst der Erfinder, erkannt zu haben, dass bereits eine vergleichsweise kleine Modifikation der einzelnen Schaufeln des Leitschaufelclusters in dem Bereich ihrer Hinterkante ausreicht, um merkliche Vorteile hinsichtlich der Schwingungsfestigkeit des Leitschaufelclusters zu erzielen. Die unterschiedlichen Hinterkantenwandstärken zweier ansonsten im Wesentlichen identisch ausgebildeter Schaufeln des Leitschaufelclusters können zum Beispiel dadurch erzielt werden, dass sich eine Schaufel in dem betroffenen radialen Längserstreckungsbereich etwas weniger weit in axialer Richtung der Strömungsmaschine erstreckt als eine andere Schaufel. Hierdurch kann ihre Hinterkante bei ansonsten gleicher Schaufelform dicker als bei der besagten anderen Schaufel des Leitschaufelcluster ausgebildet sein. Alternativ kann die Schaufel jedoch auch einfach im Bereich ihrer Hinterkante gegenüber einer anderen Schaufel des Leitschaufelclusters aufgedickt sein, so dass sich die Schaufeln beide gleich weit in axialer Richtung der Strömungsmaschine erstrecken.
Daher wird in Weiterbildung der vorliegenden Erfindung vorgeschlagen, dass zumindest zwei, vorzugsweise alle, Schaufeln des Leitschaufelclusters mit Ausnahme ihrer jeweiligen Hinterkantenbereiche identisch ausgebildet sind. Mit anderen Worten ist es vorgesehen, dass in Abhängigkeit der Anzahl an Schaufeln im Leitschaufelcluster zwei, mehrere oder alle Schaufeln zumindest im Wesentlichen gleich ausgebildet sind, wobei sie aber zumindest in einem bestimmten Radialbereich jeweils unterschiedliche Hinterkantendicken zum gezielten Verstimmen ("Detuning") aufweisen.

In einer vorteilhaften Ausgestaltung der Erfindung ist es vorgesehen, dass die wenigstens zwei Schaufeln über eine gemeinsame radial innere Plattform und eine gemeinsame radial äußere Plattform miteinander verbunden sind. Mit anderen Worten weist das Leitschaufelcluster eine radial äußere Plattform, die auch als radial äußeres Deckbandsegment bezeichnet werden kann, sowie eine radial innere Plattform, die auch als radial inneres Deckbandsegment bezeichnet werden kann, auf, zwischen denen sich die Schaufeln radial erstrecken. Hierdurch können sowohl die Schwingungseigenschaften als auch die aerodynamischen Eigenschaften des Leitschaufelclusters gezielt beeinflusst und verbessert werden. Die beiden gemeinsamen Plattformen können unabhängig voneinander jeweils lösbar oder dauerhaft mit den Schaufeln verbunden sein. Insbesondere kann mindestens eine der Plattformen integral mit den Schaufeln ausgebildet sein, beispielsweise durch Urformen oder additive Fertigungsverfahren. Ebenso kann vorgesehen sein, dass mindestens eine der Plattformen stoffschlüssig mit den Schaufeln verbunden, insbesondere verschweißt ist.

Weitere Vorteile ergeben sich, indem wenigstens zwei Schaufeln in ihren korrespondierenden Anbindungsbereichen an die wenigstens eine gemeinsame Plattform Ausrundungen mit unterschiedlichen Ausrundungsradien aufweisen. Mit anderen Worten ist es vorgesehen, dass wenigstens zwei, mehrere oder alle Schaufeln des Leitschaufelclusters in ihren Anbindungsbereichen an wenigstens eine gemeinsame Plattform, bei der es sich je nach Ausgestaltung um die äußere und/oder die innere Plattform handeln kann, einen zumindest abschnittsweise konkav oder konvex ausgerundeten Anbindungsbereich besitzen, der auch als Kehle oder Fillet bezeichnet werden kann. Dabei unterscheiden sich die Ausrundungsradien von wenigstens zwei Schaufeln, wodurch eine gezielte Verstimmung, eine Einstellung bestimmter mechanischer Eigenschaften sowie eine Beeinflussung der Ringraumkontur zwischen den Schaufeln und damit der der aerodynamischen Eigenschaften des Leitschaufelclusters ermöglicht sind. Die Ausrundungen können sich dabei grundsätzlich entlang des gesamten Umfangs jeder Schaufel oder nur entlang eines Teilbereichs des Umfangs erstrecken. Ebenso kann vorgesehen sein, dass die Ausrundungen von zwei Schaufeln sich nur in bestimmten Bereichen oder entlang des gesamten Umfangs der betreffenden Schaufeln unterscheiden. Vorzugsweise weisen zumindest Ausrundungen, die im Anbindungsbereich der Hinterkanten von wenigstens zwei Schaufeln angeordnet sind, unterschiedliche Ausrundungsradien auf, wodurch sich unterschiedliche Hinterkantenwandstärken in miteinander korrespondierenden radialen Längserstreckungsbereichen der Schaufeln und dementsprechend unterschiedlich ausgestaltete Ringräume ergeben.

In einer weiteren vorteilhaften Ausgestaltung der Erfindung ist es vorgesehen, dass das Leitschaufelcluster mindestens drei Schaufeln umfasst, wobei zumindest zwei und vorzugsweise alle Schaufeln des Leitschaufelclusters in einem korrespondierenden radialen Längserstreckungsbereich unterschiedliche Hinterkantenwandstärken aufweisen. Mit anderen Worten ist es vorgesehen, dass das Leitschaufelcluster drei oder mehr Schaufeln umfasst, von denen mindestens zwei Schaufeln unterschiedliche Hinterkantenwandstärken besitzen. Die dritte und gegebenenfalls jede weitere Schaufel kann wahlweise identisch mit der ersten oder zweiten Schaufel oder ihrerseits individuell verschieden ausgebildet sein. Generell kann gesagt werden, dass das Schwingungsverhalten des Leitschaufelclusters umso besser verändert und eingestellt werden kann, je mehr Schaufeln unterschiedliche Hinterkantenwandstärken in miteinander korrespondierenden radialen Längserstreckungsbereichen aufweisen.

In einer weiteren vorteilhaften Ausgestaltung der Erfindung ist vorgesehen, dass die Schaufeln wenigstens einen Plattform-nahen Bereich aufweisen, der sich um höchstens 25 % der radialen Längserstreckung der Hinterkante von der Plattform weg erstreckt. Der Plattform-nahe Bereich, der den radial inneren und/oder äußeren End- bzw. Anbindungsbereich der Schaufel umfasst, kann beispielsweise 25 %, 24 %, 23 %, 22 %, 21 %, 20 %, 19 %, 18 %, 17 %, 16 %, 15 %, 14 %, 13 %, 12 %, 11 %, 10 %, 9 %, 8 %, 7 %, 6 %, 5 %, 4 %, 3 %, 2 % oder 1 % der radialen Längserstreckung der betreffenden Schaufel betragen. Gemäß einer alternativen oder zusätzlichen Ausführung weisen die Schaufeln wenigstens einen Plattform-fernen Bereich auf, der sich um mindestens 25 % der radialen Längserstreckung der Hinterkante in einem mittleren Bereich der Hinterkante erstreckt. Beispielsweise kann der Plattform-ferne Bereich 25 %, 26 %, 27 %, 28 %, 29 %, 30 %, 31 %, 32 %, 33 %, 34 %, 35 %, 36 %, 37 %, 38 %, 39 %, 40 %, 41 %, 42 %, 43 %, 44 %, 45 %, 46 %, 47 %, 48 %, 49 %, 50 %, 51 %, 52 %, 53 %, 54 %, 55 %, 56 %, 57 %, 58 %, 59 %, 60 %, 61 %, 62 %, 63 %, 64 %, 65 %, 66 %, 67 %, 68 %, 69 %, 70 %, 71 %, 72 %, 73 %, 74 %, 75 % oder mehr der radialen Längserstreckung betragen. Der Plattform-nahe und/oder der Plattform-ferne Bereich können bei wenigstens zwei Leitschaufeln unterschiedliche Hinterkantenwandstärken aufweisen.

Weitere Vorteile ergeben sich, wenn wenigstens eine der Schaufeln eine maximale Hinterkantenwandstärke in einem Plattform-nahen Bereich und/oder in einem Plattform-fernen Bereich aufweist. Dies stellt eine weitere vorteilhafte Möglichkeit zur Verstimmung sowie zur Einstellung der mechanischen Eigenschaften der betreffenden Schaufel dar. Der Plattform-nahe und der Plattform-ferne Bereich unterscheiden sich bei wenigstens einer Schaufel vorzugsweise im Hinblick auf die maximale Hinterkantenwandstärke der betreffenden Schaufel.

In einer weiteren vorteilhaften Ausgestaltung der Erfindung ist vorgesehen, dass die maximale und/oder eine minimale Hinterkantenwandstärke wenigstens einer Schaufel entlang eines vorbestimmten radialen Längserstreckungsbereichs zumindest im Wesentlichen konstant ist. Die konstante maximale bzw. minimale Hinterkantenwandstärke kann dabei beispielsweise entlang eines Teils eines Plattform-nahen und/oder Plattform-fernen Bereichs oder entlang des gesamten Plattform-nahen bzw. Plattform-fernen Bereichs der Schaufel vorgesehen sein.

In einer weiteren vorteilhaften Ausgestaltung der Erfindung ist vorgesehen, dass wenigstens eine Schaufel einen radialen Übergangsbereich zwischen einer maximalen und einer minimalen Hinterkantenwandstärke aufweist. Hierdurch können innere Verspannungen und Belastungen der betreffenden Schaufel reduziert werden.

Dabei hat es sich als vorteilhaft gezeigt, wenn die Hinterkantenwandstärke im Übergangsbereich der Schaufel kontinuierlich und/oder monoton, insbesondere streng monoton von der minimalen zur maximalen Hinterkantenwandstärke zunimmt. Auf diese Weise kann ein sanfter, spannungsarmer und aerodynamisch günstiger Übergang zwischen dem Bereich minimaler Hinterkantenwandstärke und dem Bereich maximaler Hinterkantenwandstärke dargestellt werden. Alternativ oder zusätzlich ist es vorgesehen, dass sich der Übergangsbereich über höchstens 25 % der radialen Längserstreckung der Hinterkante erstreckt und damit beispielsweise 25 %, 24 %, 23 %, 22 %, 21 %, 20 %, 19 %, 18 %, 17 %, 16 %, 15 %, 14 %, 13 %, 12 %, 11 %, 10 %, 9 %, 8 %, 7 %, 6 %, 5 %, 4 %, 3 %, 2 % oder 1 % der radialen Längserstreckung der betreffenden Schaufel beträgt.

In einer weiteren vorteilhaften Ausgestaltung der Erfindung ist vorgesehen, dass zumindest zwei Schaufeln die gleiche axiale Länge und/oder die gleiche Sehnenlänge besitzen und/oder dass wenigstens eine Schaufel im Vergleich zu wenigstens einer weiteren Schaufel ein im Bereich ihrer Hinterkante rückgeschnittenes Profil besitzt. Dies erlaubt eine hohe konstruktive Freiheit bei der Ausgestaltung des Leitschaufelclusters. Indem wenigstens eine der Schaufeln im Vergleich zu einer anderen Schaufel im Bereich ihrer Hinterkante rückgeschnitten wird, können auf besonders einfache Weise unterschiedliche Hinterkantendicken realisiert werden, da zunächst identisch ausgebildete Schaufeln hergestellt bzw. verwendet und durch gezieltes Rückschneiden im Bereich der Hinterkante optimal an den jeweiligen Einsatzzweck angepasst werden können. Alternativ kann es natürlich auch vorgesehen sein, dass die verkürzte Schaufel nicht rückgeschnitten wird, sondern von vornherein kürzer als eine der anderen Schaufeln ausgebildet wird.

Ein zweiter Aspekt der Erfindung betrifft einen Leitschaufelring für eine Strömungsmaschine, umfassend wenigstens einen Leitschaufelcluster gemäß dem ersten Erfindungsaspekt. Indem der Leitschaufelring einen oder mehrere Leitschaufelclustern gemäß dem ersten Erfindungsaspekt umfasst oder aus diesen besteht, weist er ein verbessertes Schwingungsverhalten auf, da mindestens zwei und vorzugsweise alle Schaufeln des Leitschaufelrings Schaufelblätter mit unterschiedlichen Hinterkantenwandstärken bzw. Hinterkantendicken an unterschiedlichen radialen Positionen besitzen. Damit entstehen zudem nicht-symmetrische Ringraumkonturen, wodurch die aerodynamischen Eigenschaften des Leitschaufelrings verbessert werden. Ebenso können strukturelle Bedingungen im Hinblick auf Massenverteilung oder Versteifung optimal entsprechend den jeweiligen Anforderungen angepasst werden. Weitere Merkmale und deren Vorteile ergeben sich aus der Beschreibung des ersten Erfindungsaspekts, wobei vorteilhafte Ausgestaltungen des ersten Erfindungsaspekts als vorteilhafte Ausgestaltungen des zweiten Erfindungsaspekts und umgekehrt anzusehen sind.

Ein dritter Aspekt der Erfindung betrifft eine Strömungsmaschine, insbesondere ein Turboluftstrahltriebwerk, umfassend wenigstens einen Leitschaufelcluster gemäß dem ersten Erfindungsaspekt und/oder wenigsten einen Leitschaufelring gemäß dem zweiten Erfindungsaspekt. Hierdurch weist die Strömungsmaschine ein verbessertes Schwingungsverhalten auf, da mindestens zwei und vorzugsweise alle Schaufeln des Leitschaufelclusters bzw. Leitschaufelrings Schaufelblätter mit unterschiedlichen Hinterkantenwandstärken bzw. Hinterkantendicken an unterschiedlichen radialen Positionen besitzen. Damit entstehen zudem nicht-symmetrische Ringraumkonturen, wodurch die aerodynamischen Eigenschaften des Leitschaufelclusters bzw. Leitschaufelrings verbessert werden. Ebenso können strukturelle Bedingungen im Hinblick auf Massenverteilung oder Versteifung optimal entsprechend den jeweiligen Anforderungen angepasst werden. Weitere Merkmale und deren Vorteile ergeben sich aus der Beschreibung des ersten und des zweiten Erfindungsaspekts, wobei vorteilhafte Ausgestaltungen des ersten und zweiten Erfindungsaspekts als vorteilhafte Ausgestaltungen des dritten Erfindungsaspekts und umgekehrt anzusehen sind.

Weitere Merkmale der Erfindung ergeben sich aus den Ansprüchen und den Ausführungsbeispielen. Die vorstehend in der Beschreibung genannten Merkmale und Merkmalskombinationen, sowie die nachfolgend in den Ausführungsbeispielen genannten und/oder alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Ausführungsbeispielen nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Dabei zeigt:
- Fig. 1: eine schematische Pespektivansicht eines erfindungsgemäßen Leitschaufelclusters im Bereich einer radial inneren Plattform;
- Fig. 2: eine weitere schematische Pespektivansicht des erfindungsgemäßen Leitschaufelclusters im Bereich der radial inneren Plattform;
- Fig. 3: eine schematische Pespektivansicht des erfindungsgemäßen Leitschaufelclusters im Bereich einer radial äußeren Plattform;
- Fig. 4: eine weitere schematische Pespektivansicht des erfindungsgemäßen Leitschaufelclusters im Bereich der radial äußeren Plattform;
- Fig. 5: zwei benachbarte Schaufeln des erfindungsgemäßen Leitschaufelclusters in schematischer Querschnittsansicht, wobei die Schaufeln unterschiedliche Hinterkantenradien bei gleicher axialer Länge besitzen
- Fig. 6: zwei benachbarte Schaufeln des erfindungsgemäßen Leitschaufelclusters in schematischer Querschnittsansicht, wobei eine der Schaufeln durch Rückschnitt ihres Schaufelprofils einen gegenüber der anderen Schaufel vergrößerten Hinterkantenradius besitzt;
- Fig. 7: eine Überlagerung von zwei Schaufelprofilen mit gleicher axiale Länge und unterschiedlichen Hinterkantenradien; und
- Fig. 8: eine Überlagerung von zwei Schaufelprofilen mit gleicher Sehnenlänge und unterschiedlichen Hinterkantenradien.

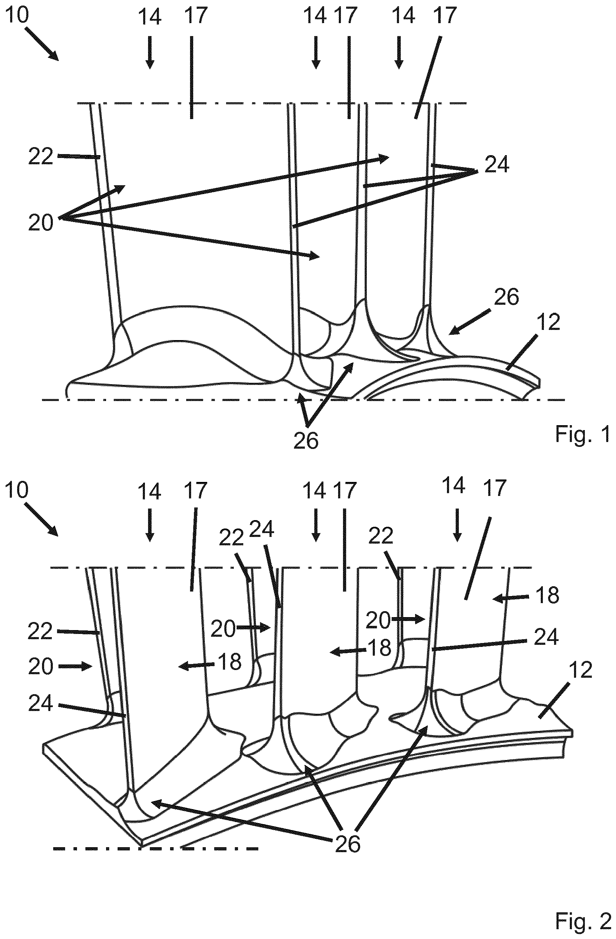

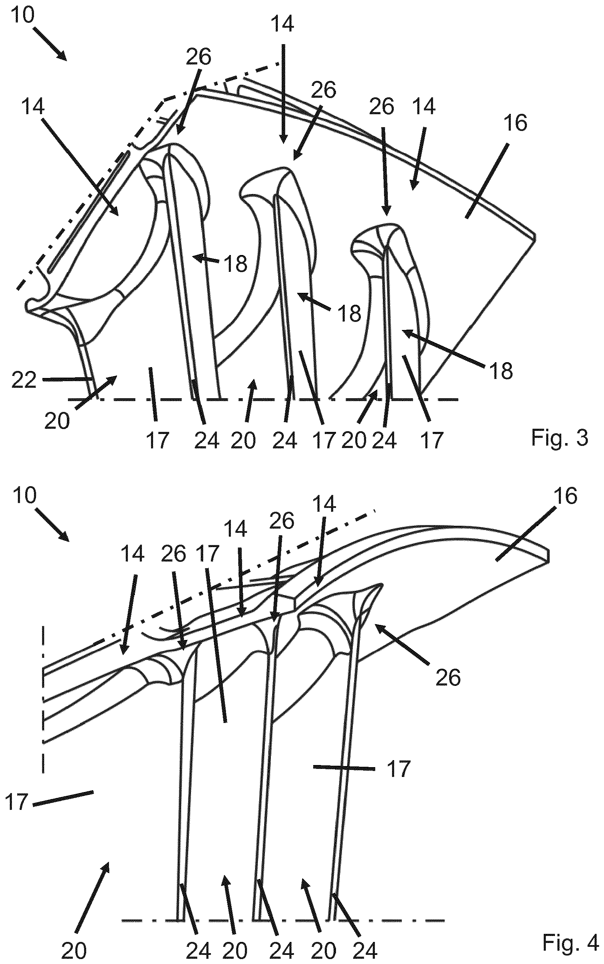

Fig. 1 zeigt eine schematische Pespektivansicht eines erfindungsgemäßen Leitschaufelclusters 10 im Bereich einer radial inneren Plattform 12. Fig. 1 wird im Folgenden in Zusammenschau mit Fig. 2 erläutert werden, in welcher eine weitere schematische Pespektivansicht des erfindungsgemäßen Leitschaufelclusters 10 im Bereich der radial inneren Plattform 12 aus einem anderen Blickwinkel gezeigt ist. Man erkennt, dass das Leitschaufelcluster 10 drei integrale Schaufeln 14 umfasst, die über die gemeinsame radial innere Plattform 12 sowie über eine gemeinsame radial äußere Plattform 16 (s. Fig. 3) miteinander verbunden sind. Das Leitschaufelcluster 10 wird zusammen mit weiteren Leitschaufelclustern (nicht gezeigt), die gleich oder unterschiedlich ausgebildet sein können, zur Herstellung eines Leitschaufelrings (nicht gezeigt) in einem Flugtriebwerk verwendet. Jede Schaufel 14 umfasst ein Schaufelblatt 17 mit einer Saugseite 18 und einer Druckseite 20, wobei die Saugseite 18 und die Druckseite 20 jeweils in einer Vorderkante 22 und einer Hinterkante 24 miteinander verbunden sind. Um ein verbessertes Schwingungsverhalten zu erzielen, weisen die drei Schaufeln 14 in miteinander korrespondierenden radialen Längserstreckungsbereichen jeweils unterschiedliche Hinterkantenwandstärken auf. Mit anderen Worten weisen unterschiedliche Schaufelblätter 17 bereichsweise verschiedene Hinterkantendicken an bestimmten radialen Positionen bezogen auf die Plattform 12 bzw. 16 auf. Damit entstehen nicht-symmetrische Ringraumkonturen am Leitschaufelcluster 10, wodurch auch die aerodynamischen Eigenschaften des Leitschaufelclusters 10 gezielt beeinflusst und verbessert werden. Abgesehen von ihren Hinterkanten sind die Schaufeln 14 im vorliegenden Ausführungsbeispiel identisch aufgebaut. Grundsätzlich können auch nur zwei der drei Schaufeln 14 unterschiedliche radiale Hinterkantenwandstärkeverläufe aufweisen, wohingegen die dritte Schaufel 14, insbesondere hinsichtlich ihres radialen Hinterkantenwandstärkeverlaufs, identisch zu einer der beiden anderen Schaufeln des Leitschaufelclusters 10 ausgebildet ist.

Die unterschiedlichen radialen Hinterkantenwandstärken werden im vorliegenden Ausführungsbeispiel durch unterschiedliche Ausrundungsradien in den Anbindungsbereichen 26 der Schaufeln 14 an die Plattform 12 erreicht. Die Anbindungsbereiche 26, die auch als Fillet oder Kehle bezeichnet werden können, befinden sich im Plattform-nahen Bereich der Schaufeln und weisen jeweils eine radialen Längserstreckung auf, die beispielsweise etwa 3 % der radialen Längserstreckung der gesamten Hinterkante 24 der Schaufel 14 bzw. des Schaufelblatts 17 beträgt. Aufgrund der ausgerundeten Form gehen die Anbindungbereiche 26 kontinuierlich in die Plattform-fernen bzw. mittleren Bereiche der jeweiligen Schaufeln 14 über, welche die kleinsten Hinterkantenwandstärken aufweisen. Dabei kann es vorgesehen sein, dass die Ausrundungsradien in den Anbindungsbereichen 26 gegenüber herkömmlichen Ausrundungsradien unterschiedlich stark vergrößert, aber nicht verkleinert werden, um strukturelle Versteifungen zu erzeugen. Alternativ oder zusätzlich ist es auch möglich, strukturelle Anpassungen in anderen Bereichen der Hinterkanten 24 zu erzeugen und beispielsweise lokale Aufdickungen oder Ausnehmungen einzelner Bereiche der jeweiligen Hinterkante 24 in einem Plattform-fernen bzw. mittleren Bereich der einzelnen Schaufeln 14 vorzunehmen.

Fig. 3 zeigt eine schematische Pespektivansicht des erfindungsgemäßen Leitschaufelclusters 10 im Bereich der radial äußeren Plattform 16 und wird in Zusammenschau mit Fig. 4 erläutert werden, welche eine weitere schematische Pespektivansicht des erfindungsgemäßen Leitschaufelclusters 10 im Bereich der radial äußeren Plattform 16 aus einem anderen Blickwinkel zeigt. Man erkennt, dass auch am radial äußeren Endbereich des Leitschaufelclusters 10 unterschiedliche radiale Hinterkantenwandstärke durch unterschiedliche Ausrundungsradien in den Anbindungsbereichen 26 der Schaufeln 14 an die radial äußere Plattform 16 erreicht werden. Die Anbindungsbereiche 26 befinden sich ebenfalls in einem Plattform-nahen Bereich der Schaufeln und weisen jeweils eine radialen Längserstreckung auf, die etwa 3 % der radialen Längserstreckung der gesamten Hinterkante 24 der Schaufel 14 bzw. des Schaufelblatts 17 beträgt. Der zwischen dem radial inneren und dem radial äußeren Anbindungsbereich 26 liegende Plattform-ferne Bereich der Schaufeln weist dementsprechend eine radiale Längserstreckung auf, die etwa 94 % der radialen Längserstreckung der gesamten Hinterkante 24 der Schaufel 14 bzw. des Schaufelblatts 17 beträgt. Die Hinterkanten 24 der Schaufeln 14 weisen gemäß dem vorliegenden Ausführungsbeispiel in diesem Plattform-fernen Bereich jeweils eine konstante Hinterkantenwandstärke auf.

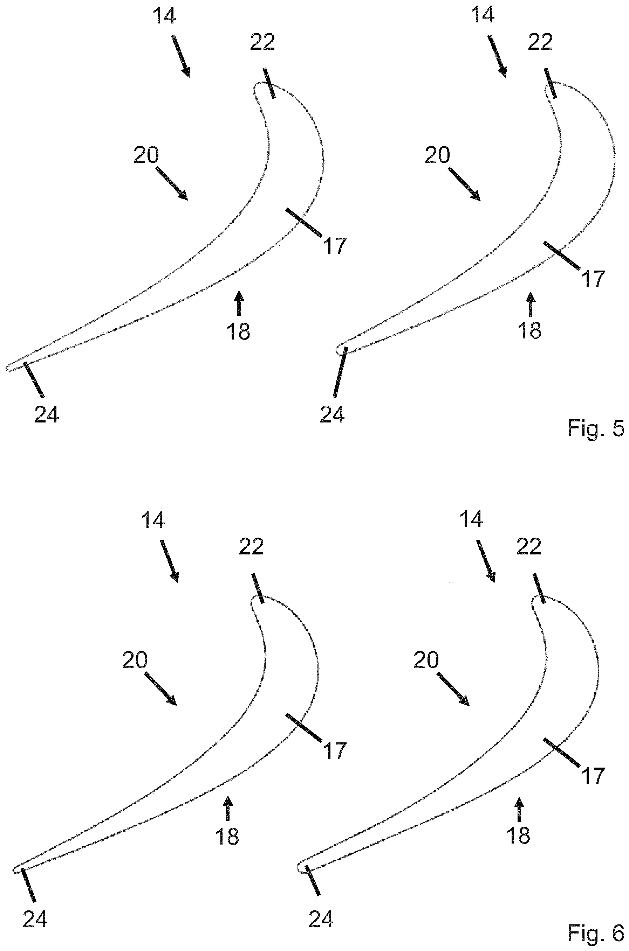

Fig. 5 zeigt gemäß einem weiteren Ausführungsbeispiel zwei Schaufeln 14 des erfindungsgemäßen Leitschaufelclusters 10 in schematischer Querschnittsansicht. Man erkennt, dass die rechte Schaufel 14 gegenüber der linken Schaufel 14 bei gleicher axialer Länge eine verdickte Hinterkante 24 bzw. einen verdickten Hinterkantenbereich besitzt.

Fig. 6 zeigt gemäß einem weiteren Ausführungsbeispiel zwei benachbarte Schaufeln 14 des erfindungsgemäßen Leitschaufelclusters 10 in schematischer Querschnittsansicht, wobei die Schaufeln 14 im Unterschied zum vorhergehenden Ausführungsbeispiel nicht die gleiche axiale Länge besitzen. Stattdessen werden zunächst zwei identisch ausgebildete Schaufeln 14 bereitsgestellt, wonach die rechte Schaufel 14 im Bereich ihrer Hinterkante 24 rückgeschnitten wird. Hierdurch weist die rechte Schaufel 14 gegenüber der linken Schaufel 14 ebenfalls einen vergrößerten Hinterkantenradius auf.

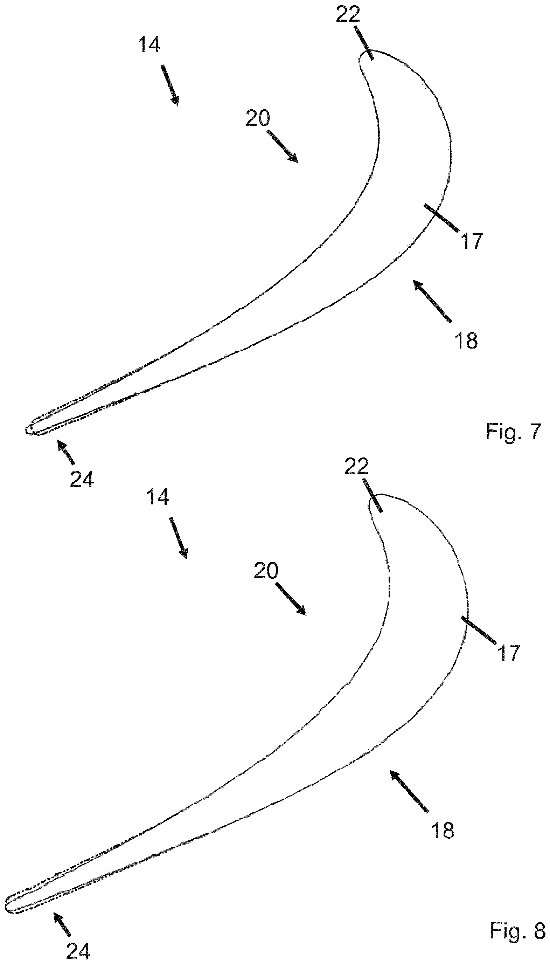

Fig. 7 zeigt zur Verdeutlichung eine Überlagerung von zwei Schaufelprofilen mit gleicher axiale Länge und unterschiedlichen Hinterkantenradien. Man erkennt, dass die Schaufeln 14, von denen die in Fig. 5 links dargestellte Schaufel 14 vorliegend mit einer durchgezogenen Linie und die in Fig. 5 rechts dargestellte Schaufel 14 gepunktet dargestellt sind, sich nur im Bereich ihrer Hinterkanten 24, das heißt bezogen auf ihre axiale Gesamtlängen nur in einem hinteren Längenbereich von weniger als 30 % unterscheiden. Ansonsten sind die Schaufeln 14 identisch ausgebildet.

Fig. 8 zeigt gemäß einem weiteren Ausführungsbeispiel eine Überlagerung von zwei Schaufelprofilen mit gleicher Sehnenlänge und unterschiedlichen Hinterkantenradien. Man erkennt, dass die Schaufeln 14 sich ebenfalls nur im Bereich ihrer Hinterkanten 24 unterscheiden und ansonsten identisch ausgebildet sind. Im Unterschied zum vorhergehenden Ausführungsbeispiel besitzen die gepunktet dargestellte Schaufel 14 und die mit einer durchgehenden Linie dargestellte Schaufel 14 unterschiedliche axialen Längen.

### Bezugszeichenliste:

- 10: Leitschaufelcluster
- 12: radial innere Plattform
- 14: Schaufel
- 16: radial äußere Plattform
- 17: Schaufelblatt
- 18: Saugseite
- 20: Druckseite
- 22: Vorderkante
- 24: Hinterkante
- 26: Anbindungbereich

## Patentansprüche

1. Leitschaufelcluster (10) für eine Strömungsmaschine, insbesondere für ein Turbolufitstrahltriebwerk, mit wenigstens zwei Schaufeln (14), die über wenigstens eine gemeinsame Plattform (12, 16) zur radialen Begrenzung eines Strömungskanals der Strömungsmaschine miteinander verbunden sind, wobei jede Schaufel (14) ein Schaufelblatt (17) mit einer Saugseite (18) und einer Druckseite (20) aufweist, die in einer Vorderkante (22) und einer Hinterkante (24) miteinander verbunden sind, wobei die wenigstens zwei Schaufeln (14) zumindest in einem korrespondierenden radialen Längserstreckungsbereich unterschiedliche Hinterkantenwandstärken aufweisen, **dadurch gekennzeichnet, dass** die wenigstens zwei Schaufeln (14) in einem Axialbereich von wenigstens 50% ausgehend von der Vorderkante im Wesentlichen identisch ausgebildet sind.

2. Leitschaufelcluster (10) nach Anspruch 1,
**dadurch gekennzeichnet, dass**
zumindest zwei, vorzugsweise alle, Schaufeln (14) mit Ausnahme ihrer jeweiligen Hinterkantenbereiche im Wesentlichen identisch ausgebildet sind,

3. Leitschaufelcluster (10) nach Anspruch 1 oder 2,
**dadurch gekennzeichnet, dass**
die wenigstens zwei Schaufeln (14) über eine gemeinsame radial innere Plattform (12) und eine gemeinsame radial äußere Plattform (16) miteinander verbunden sind.

4. Leitschaufelcluster (10) nach einem der Ansprüche 1 bis 3,
**dadurch gekennzeichnet, dass**
wenigstens zwei Schaufeln (14) in ihren korrespondierenden Anbindungsbereichen (26) an die wenigstens eine gemeinsame Plattform (12, 16) Ausrundungen mit unterschiedlichen Ausrundungsradien aufweisen.

5. Leitschaufelcluster (10) nach einem der Ansprüche 1 bis 4,
**dadurch gekennzeichnet, dass**
dieses mindestens drei Schaufeln (14) umfasst, wobei zumindest zwei und vorzugsweise alle Schaufeln (14) in einem korrespondierenden radialen Längserstreckungsbereich unterschiedliche Hinterkantenwandstärken aufweisen.

6. Leitschaufelcluster (10) nach einem der Ansprüche 1 bis 5,
**dadurch gekennzeichnet, dass**
die Schaufeln (14) wenigstens einen Plattform-nahen Bereich aufweisen, der sich um höchstens 25 % der radialen Längserstreckung der Hinterkante (24) von der Plattform (12, 16) weg erstreckt, und/oder wenigstens einen Plattform-fernen Bereich aufweisen, der sich um mindestens 25 % der radialen Längserstreckung der Hinterkante (24) in einem mittleren Bereich der Hinterkante (24) erstreckt.

7. Leitschaufelcluster (10) nach Anspruch 6,
**dadurch gekennzeichnet, dass**
wenigstens eine der Schaufeln (14) eine maximale Hinterkantenwandstärke in einem Plattform-nahen Bereich und/oder in einem Plattform-fernen Bereich aufweist.

8. Leitschaufelcluster (10) nach einem der Ansprüche 1 bis 7,
**dadurch gekennzeichnet, dass**
die maximale und/oder eine minimale Hinterkantenwandstärke wenigstens einer Schaufel (14) entlang eines vorbestimmten radialen Längserstreckungsbereichs zumindest im Wesentlichen konstant ist.

9. Leitschaufelcluster (10) nach einem der Ansprüche 1 bis 8,
**dadurch gekennzeichnet, dass**
wenigstens eine Schaufel (14) einen radialen Übergangsbereich zwischen einer maximalen und einer minimalen Hinterkantenwandstärke aufweist.

10. Leitschaufelcluster (10) nach Anspruch 9,
**dadurch gekennzeichnet, dass**
die Hinterkantenwandstärke im Übergangsbereich der Schaufel (14) kontinuierlich und/oder monoton, insbesondere streng monoton von der minimalen zur maximalen Hinterkantenwandstärke zunimmt und/oder dass sich der Übergangsbereich über höchstens 25 % der radialen Längserstreckung der Hinterkante (24) erstreckt.

11. Leitschaufelcluster (10) nach einem der Ansprüche 1 bis 10,
**dadurch gekennzeichnet, dass**
zumindest zwei Schaufeln (14) die gleiche axiale Länge und/oder die gleiche Sehnenlänge besitzen und/oder dass wenigstens eine Schaufel (14) im Vergleich zu wenigstens einer weiteren Schaufel (14) ein im Bereich ihrer Hinterkante (24) rückgeschnittenes Profil besitzt.

12. Leitschaufelring für eine Strömungsmaschine, umfassend wenigstens einen Leitschaufelcluster (10) nach einem der Ansprüche 1 bis 11.

13. Strömungsmaschine, insbesondere Turboluftstrahltriebwerk, umfassend wenigstens einen Leitschaufelcluster (10) nach einem der Ansprüche 1 bis 11 und/oder wenigsten einen Leitschaufelring gemäß Anspruch 12.

## Claims

1. Guide vane cluster (10) for a turbomachine, in particular for a turbojet engine, comprising at least two vanes (14) which are interconnected by means of at least one common platform (12, 16) for radially defining a flow duct of the turbomachine, each vane (14) comprising an airfoil (17) having a suction side (18) and a pressure side (20) which are interconnected at a front edge (22) and a rear edge (24), the at least two vanes (14) having different rear-edge wall thicknesses at least in a corresponding radial longitudinal extension region, **characterized in that** the at least two vanes (14) are substantially identical in an axial region of at least 50% proceeding from the front edge.

2. Guide vane cluster (10) according to claim 1, **characterized in that** at least two, preferably all, of the vanes (14) are substantially identical with the exception of their respective rear-edge regions.

3. Guide vane cluster (10) according to either claim 1 or claim 2, **characterized in that** the at least two vanes (14) are interconnected by means of a common radially inner platform (12) and a common radially outer platform (16).

4. Guide vane cluster (10) according to any of claims 1 to 3, **characterized in that** at least two vanes (14) have fillets that have different fillet radii in the corresponding connection regions (26) of said vanes to the at least one common platform (12, 16).

5. Guide vane cluster (10) according to any of claims 1 to 4, **characterized in that** it comprises at least three vanes (14), at least two and preferably all of the vanes (14) having different rear-edge wall thicknesses in a corresponding radial longitudinal extension region.

6. Guide vane cluster (10) according to any of claims 1 to 5, **characterized in that** the vanes (14) have at least one region close to the platform which extends away from the platform (12, 16) by at most 25% of the radial longitudinal extension of the rear edge (24), and/or at least one region remote from the platform which extends in a central region of the rear edge (24) by at least 25% of the radial longitudinal extension of the rear edge (24).

7. Guide vane cluster (10) according to claim 6, **characterized in that** at least one of the vanes (14) has a maximum rear-edge wall thickness in a region close to the platform and/or in a region remote from the platform.

8. Guide vane cluster (10) according to any of claims 1 to 7, **characterized in that** the maximum and/or a minimum rear-edge wall thickness of at least one vane (14) is at least substantially constant along a predetermined radial longitudinal extension region.

9. Guide vane cluster (10) according to any of claims 1 to 8, **characterized in that** at least one vane (14) has a radial transition region between a maximum and a minimum rear-edge wall thickness.

10. Guide vane cluster (10) according to claim 9, **characterized in that** the rear-edge wall thickness in the transition region of the vane (14) continuously and/or monotonously, in particular strictly monotonously, increases from the minimum to the maximum rear-edge wall thickness and/or **in that** the transition region extends over at most 25% of the radial longitudinal extension of the rear edge (24).

11. Guide vane cluster (10) according to any of claims 1 to 10, **characterized in that** at least two vanes (14) have the same axial length and/or the same chord length and/or **in that** at least one vane (14) has, compared with at least one other vane (14), a profile that is cut back in the region of its rear edge (24).

12. Guide vane ring for a turbomachine, comprising at least one guide vane cluster (10) according to any of claims 1 to 11.

13. Turbomachine, in particular a turbojet engine, comprising at least one guide vane cluster (10) according to any of claims 1 to 11 and/or at least one guide vane ring according to claim 12.

## Revendications

1. Ensemble d'aubes directrices (10) pour turbomachine, en particulier pour un turboréacteur, comportant au moins deux aubes (14) qui sont reliées l'une à l'autre par au moins une plateforme commune (12, 16) pour délimiter radialement un canal d'écoulement de la turbomachine, chaque aube (14) comprenant une surface portante (17) ayant un côté aspiration (18) et un côté pression (20), qui sont reliés l'un à l'autre dans un bord d'attaque (22) et un bord de fuite (24), les au moins deux aubes (14) ayant, au moins dans une zone d'extension longitudinale radiale correspondante, différentes épaisseurs de paroi de bord de fuite, **caractérisé en ce que** les au moins deux aubes (14) sont formées de manière sensiblement identique dans une zone axiale d'au moins 50 % à partir du bord d'attaque.

2. Ensemble d'aubes directrices (10) selon la revendication 1, **caractérisé en ce qu'**au moins deux, de préférence la totalité, des aubes (14), sont formées de manière sensiblement identique à l'exception de leurs zones de bord de fuite respectives.

3. Ensemble d'aubes directrices (10) selon la revendication 1 ou 2, **caractérisé en ce que** les au moins deux aubes (14) sont reliées l'une à l'autre via une plateforme intérieure radialement commune (12) et une plateforme extérieure radialement commune (16).

4. Ensemble d'aubes directrices (10) selon l'une des revendications 1 à 3, **caractérisé en ce qu'**au moins deux aubes (14) présentent des courbures avec des rayons de courbure différents dans leurs zones de liaison correspondantes (26) au niveau de l'au moins une plate-forme commune (12, 16).

5. Ensemble d'aubes directrices (10) selon l'une des revendications 1 à 4, **caractérisé en ce qu'**il comprend au moins trois aubes (14), au moins deux, et de préférence la totalité, des aubes (14) présentant, dans une zone d'extension longitudinale radiale correspondante, différentes épaisseurs de paroi de bord de fuite.

6. Ensemble d'aubes directrices (10) selon l'une des revendications 1 à 5, **caractérisé en ce que** les aubes (14) ont au moins une zone proche de la plateforme qui s'éloigne de 25 % au maximum de l'extension longitudinale radiale du bord de fuite (24) de la plateforme (12, 16) et/ou au moins une zone distante de la plateforme, qui s'étend d'au moins 25 % de l'extension longitudinale radiale du bord de fuite (24) dans une zone centrale du bord de fuite (24).

7. Ensemble d'aubes directrices (10) selon la revendication 6, **caractérisé en ce qu'**au moins une des aubes (14) a une épaisseur de paroi maximale du bord de fuite dans une zone proche de la plateforme et/ou dans une zone distante de la plateforme.

8. Ensemble d'aubes directrices (10) selon l'une des revendications 1 à 7, **caractérisé en ce que** l'épaisseur de paroi maximale et/ou une épaisseur de paroi minimale du bord de fuite d'au moins une aube (14) est au moins sensiblement constante le long d'une zone d'extension longitudinale radiale prédéterminée.

9. Ensemble d'aubes directrices (10) selon l'une des revendications 1 à 8, **caractérisé en ce qu'**au moins une aube (14) présente une zone de transition radiale comprise entre une épaisseur de paroi maximale et une épaisseur de paroi minimale du bord de fuite.

10. Ensemble d'aubes directrices (10) selon la revendication 9, **caractérisé en ce que** l'épaisseur de paroi du bord de fuite dans la zone de transition de l'aube (14) augmente de façon continue et/ou monotone, en particulier de manière strictement monotone, de l'épaisseur de paroi minimale à l'épaisseur de paroi maximale du bord de fuite et/ou **en ce que** la zone de transition s'étend sur 25 % au maximum de l'extension longitudinale radiale du bord de fuite (24).

11. Ensemble d'aubes directrices (10) selon l'une des revendications 1 à 10, **caractérisé en ce qu'**au moins deux aubes (14) possèdent la même longueur axiale et/ou la même longueur de corde et/ou **en ce qu'**au moins une aube (14) possède un profil découpé dans la zone de son bord de fuite (24) par rapport à au moins une autre aube (14).

12. Couronne d'aubes directrices pour turbomachine, comprenant au moins un ensemble d'aubes directrices (10) selon l'une des revendications 1 à 11.

13. Turbomachine, en particulier turboréacteur, comprenant au moins un ensemble d'aubes directrices (10) selon l'une des revendications 1 à 11 et/ou au moins une couronne d'aubes directrices selon la revendication 12.
